# EUROPÄISCHE PATENTSCHRIFT

(11) **EP 0 894 683 B1**
(45) Veröffentlichungstag und Bekanntmachung des Hinweises auf die Patenterteilung: **15.10.2003**
(21) Anmeldenummer: 98113142.8
(22) Anmeldetag: 15.07.1998
(51) Int. Cl.: B60R 25/10, G08G 1/127

(54) **Diebstahlsicherung**
Antitheft device
Dispositif anti-vol

(30) Priorität: 02.08.1997 DE 19733460
(43) Veröffentlichungstag der Anmeldung: 03.02.1999
(73) Patentinhaber: Grundig Car InterMedia System GmbH, 90471 Nürnberg (DE)
(72) Erfinder: Reiss, Willy, 90762 Fuerth (DE)

(56) Entgegenhaltungen:
- DE-A- 19 512 074
- GB-A- 2 290 402
- US-A- 5 491 486
- US-A- 5 550 551
- US-A- 5 598 140
- PATENT ABSTRACTS OF JAPAN vol. 014, no. 088 (P-1008), 19. Februar 1990 (1990-02-19) & JP 01 297577 A (MATSUSHITA ELECTRIC WORKS LTD), 30. November 1989 (1989-11-30)
- PATENT ABSTRACTS OF JAPAN vol. 1996, no. 07, 31. Juli 1996 (1996-07-31) & JP 08 077471 A (FUJITSU TEN LTD), 22. März 1996 (1996-03-22)

## Beschreibung

Die Erfindung betrifft eine Diebstahlsicherung eines beweglichen Objektes, insbesondere eines bewegbaren und nicht fest mit dem Erdboden verbundenen Objektes, gemäß dem Oberbegriff des Anspruchs 1.

Derartige Diebstahlsicherungen, insbesondere für Kraftfahrzeuge, sind beispielsweise aus DE 195 12 074 bekannt. Diese Diebstahlsicherung für ein Kraftfahrzeug umfaßt eine GPS-Einheit, die laufend die Standortkoordinaten des Fahrzeuges ermittelt, sowie einen Datenspeicher, in welchem eine vorgegebene Grenze in Form eines, von einem Ursprung ausgehenden, radialen Grenzvektors abgelegt ist. Ein Überwachungsrechner bestimmt aus den abgelegten Grenzvektoren und dem von der GPS-Einheit bereitgestellten Standortvektor jeweils, ob die Grenze überschritten ist. In diesem Fall erzeugt der Überwachungsrechner ein Alarmsignal, durch welches ein für das Weiterfahren des Fahrzeuges notwendiger Teil des Fahrzeuges deaktiviert wird.

Aus DE 42 24 536 ist eine Anlage zur geographisch definierten Begrenzung des Bewegungsraumes von Fahrzeugen bekannt. Über Satelliten empfangene Signale werden im Fahrzeug mittels eines Empfängers in Positionskoordinaten umgesetzt, wobei der Empfänger mit einer Auswerteeinheit verbunden ist. Verläßt das Fahrzeug einen definierten geographischen Bereich, wird die das Antriebssystem steuernde Motorelektronik blockiert und gleichzeitig über eine Übertragungseinheit der aktuelle Standort an eine Leitstelle übermittelt.

Oben genannte Diebstahlsicherungen haben aber den Nachteil, daß im Falle der Unterbrechung des Empfanges der Satellitensignale bzw. einer Unterbrechung der Verbindung der Diebstahlsicherung zu einem Leitrechner, die Diebstahlsicherung versucht, weiterhin sowohl die Satellitensignale zu empfangen, als auch in Kontakt mit dem Leitrechner zu treten. Um dies zu erreichen wird zumeist die Sendeenergie erhöht und die Übertragungs- und Auswertezyklen verkürzt. Diese Maßnahmen haben zur Folge, daß der Energiespeicher, welcher die Diebstahlsicherung versorgt, kontinuierlich entladen wird. Insbesondere bei einem längeren Parken eines zu sichernden Fahrzeuges in einem Bereich, in welchem keine Funkverbindung möglich ist, wie beispielsweise in einer Tiefgarage oder einer Wellblechgarage, oder ähnlichem, kommt es zu oben beschriebenem Verhalten.

Außerdem haben die bekannten Diebstahlsicherungen den Nachteil, daß ein effektives Verhindern des Diebstahls nicht erfolgt. Zwar kann das gesicherte Fahrzeug nicht selbständig weiterbewegt werden, aber ein Abtransport wird nicht verhindert.

Aufgabe der Erfindung ist es eine Diebstahlsicherung anzugeben, welche einen reduzierten Energieverbrauch aufweist und die bekannten Probleme vermeidet.

Diese Aufgabe wird mit den Merkmalen des Anspruches 1 gelöst. Vorteilhafte Ausgestaltungen und Weiterbildungen der Erfindung ergeben sich aus den abhängigen Ansprüchen.

Der Vorteil der Erfindung ist, daß die Diebstahlsicherung selbständig Energieverbraucher, bzw. Teile, der Diebstahlsicherung abschaltet und nur wieder aktiviert, wenn eine unzulässige Bewegung des oder ein Anstoß an das zu sichernde bewegliche Objekt festgestellt wird.

Ein weiterer Vorteil der Diebstahlsicherung gemäß Anspruch 2 liegt darin, daß eine Alarmierungseinheit, insbesondere eine Sirene, Lichtzeichen o.ä., erst dann ausgelöst wird, wenn über Sensoren festgestellt worden ist, daß sich die Lage des beweglichen Objektes verändert hat. Hierdurch wird verhindert, daß eine Auslösung eines Alarms erfolgt, obwohl kein Diebstahlversuch vorliegt.

Ein Vorteil der Erfindung gemäß Anspruch 3 liegt darin, daß am beweglichen Objekt eine oder mehrere Fixierungseinrichtungen angeordnet sind, die im Fall einer unzulässigen Bewegung des beweglichen Objektes selbiges mit dem unter diesem befindlichen Boden kraftschlüssig verbinden.

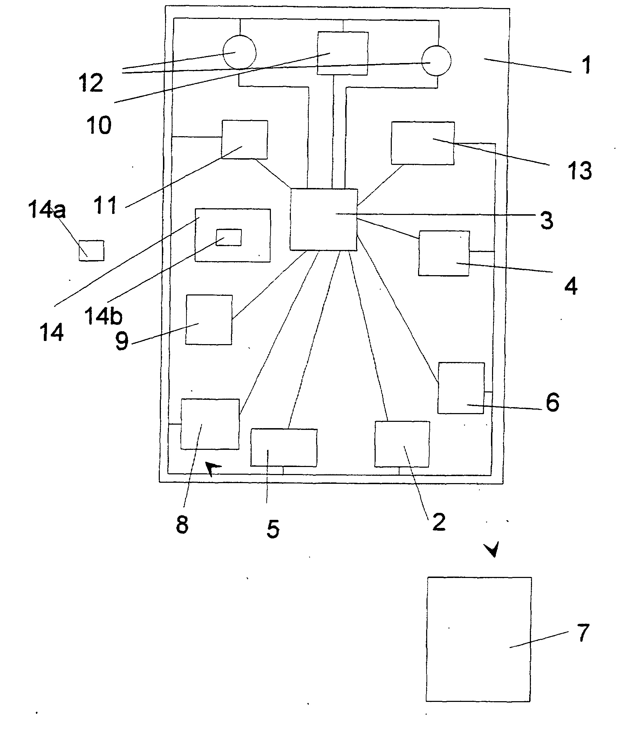

Die Merkmale der Erfindung werden im folgenden an einem exemplarischen Ausführungsbeispiel anhand der Zeichnung erläutert. Das Ausführungsbeispiel ist keine erschöpfende Aufzählung der erfindungsgemäßen Ausgestaltungsmöglichkeiten, sondern hat nur beispielhaften Charakter. Die Merkmale der Ansprüche können einzeln oder in beliebiger Kombination miteinander benutzt werden. Die Zeichnung zeigt ein Blockschaltbild eines Ausführungsbeispiels der Diebstahisicherung.

Die Diebstahlsicherung ist an, bzw. in einem beweglichen Objekt 1 angeordnet, bzw. in diesem integriert. Bei dem beweglichen Objekt 1 handelt es sich um ein Objekt, das nicht ortsfest und/oder auf Dauer mit dem Erdboden verbunden, sondern beweglich und/oder bewegbar ist. Die Diebstahlsicherung besteht aus einer GPS-Einheit 2, einer Steuereinheit 3, einer Speichereinheit 4, einer Alarmeinheit 5, einer Sendeeinheit 6, einem Leitrechner 7, einer Empfangseinheit 8, einer Ausgabeeinheit 10, einer Bewegungsdetektoreinheit 11, Sensoren 12, einer Fixierungseinrichtung 13 sowie aus einer Transpondereinheit 14, die sich aus einer Sendeeinheit 14a und einer Empfangseinheit 14b zusammensetzt.

Die Steuereinheit 3 überwacht und steuert sämtliche Funktionen und Einheiten der Diebstahlsicherung. Die GPS-Einheit 2 ist am beweglichen Objekt 1 derart angeordnet, daß der Empfang von Satellitensignalen optimal ermöglicht ist. Diese Satellitendaten werden in der GPS-Einheit 2 in Positionsdaten des beweglichen Objektes 1 umgewandelt und an die Steuereinheit 3 übermittelt. Die Steuereinheit 3 speichert diese aktuellen Positionsdaten des beweglichen Objektes 1 in der Speichereinheit 4. Zugleich weist die Steuereinheit 3 die Sendeeinheit 6 an, diese Positionsdaten über den aktuellen Standort des beweglichen Objektes 1 an einen Leitrechner 7 zu übermitteln. Dieser Leitrechner 7 kann sich überall im Bereich der Sendeleistung der Sendeeinheit 6 befinden. Der Leitrechner 7 vergleicht die aktuell übermittelte Position des beweglichen Objektes 1 mit vorgegebenen Bewegungsbereichen, in welchen das bewegliche Objekt 1 frei bewegt werden darf.

Der Leitrechner 7 nimmt mit der Steuerzentrale 3 über die Empfangseinheit 8 Verbindung auf. Der Leitrechner 7 übermittelt über die Empfangseinheit 8 Daten und Befehle an die Steuereinheit 3. Die Quittierung des Empfanges von derartigen Daten übersendet die Steuereinheit 3 über die Sendeeinheit 6 an den Leitrechner 7.

In einer vorteilhaften Ausgestaltung der Erfindung ist die Sendeeinheit 6 und die Empfangseinheit 8 miteinander integriert und in Form eines Funktelefons realisiert. Dies hat den Vorteil, daß über das Funktelefonnetz der Leitrechner 7 mit der Steuereinheit 3 verbunden ist und die Sendeleistung des Sendeeinheit 6 lediglich geringen Einfluß auf den Bewegungsraum des beweglichen Objektes 1 hat.

Die Übermittlung der ermittelten Standortkoordinaten erfolgt in regelmäßigen vordefinierten Zeitabständen. Bei Störungen in der Übertragung weist der Leitrechner 7 die Steuereinheit 3 an, die Zeitabstände zu verkürzen.

Die Diebstahlsicherung wird mittels der Transpondereinheit 14 scharfgeschaltet.

Die Transpondereinheit 14 weist eine Einrastvorrichtung für die Sendeeinheit 14a auf. Ist die Sendeeinheit 14a in dieser Einrastvorrichtung eingerastet, so ist die Diebstahlsicherung deaktiviert und das bewegliche Objekt 1 kann ohne Alarmauslösung bewegt werden.

Ist die Sendeeinheit 14a nicht in der Einrastvorrichtung der Transpondereinheit eingerastet, überprüft die Steuereinheit 3, ob die Sendeeinheit 14a und die Empfangseinheit 14b der Transpondereinheit 14 in Funkkontakt miteinander stehen. Die Sendeeinheit 14a der Transpondereinheit 14 hat nur eine geringe Sendeleistung und daher nur eine Reichweite von wenigen Metern. Besteht Funkkontakt zwischen der Sendeeinheit 14a und der Empfangseinheit 14b, so setzt die Steuereinheit 3 die Datenübertragung zum und vom Leitrechner 7 auf eine große Zeitdauer. Sobald aber der Funkkontakt nicht mehr besteht, steuert die Steuereinheit 3 die Diebstahlsicherung in einen Überwachungszustand. Die Zeitintervalle zur Datenübertragung werden verkürzt. Kommt es im weiteren zu einer Unterbrechung der Verbindung zwischen der Sendeeinheit 6 und dem Leitrechner 7, sowie dem Leitrechner 7 und der Empfangseinheit 8 und kann die GPS-Einheit 2 keine Positionsdaten mehr ermitteln, erkennt dies die Steuereinheit 3 und versetzt die Diebstahlsicherung in einen Alarmzustand. In diesem Alarmzustand überwacht die Steuereinheit 3 die Bewegungsdetektoreinheit 11.

Wird über die Bewegungsdetektoreinheit 11 keine Bewegung festgestellt, so kann die Steuereinheit 3 annehmen, daß das bewegliche Objekt 1 sich in Ruhe befindet. In diesem Fall deaktiviert die Steuereinheit 3 verschiedene strom- bzw. energieverbrauchende Einheiten der Anlage. Insbesondere wird die GPS-Einheit 2, die Alarmeinheit 5, die Sendeeinheit 6, die Empfangseinheit 8 und die Fixierungseinrichtung 13 deaktiviert. Auf diese Weise wird erreicht, daß der Energieverbrauch der Anlage reduziert wird. Die Überwachung der Bewegungsdetektoreinheit 11 wird aber fortgesetzt.

Wird das bewegliche Objekt 1 angestoßen oder bewegt, so wird dies über die Bewegungsdetektoreinheit 11 detektiert. Die Steuereinheit 3 aktiviert alle vorher deaktivierten Einheiten der Diebstahlsicherung und versucht Kontakt mit dem Leitrechner 7 herzustellen. Erfolgt innerhalb einer vordefinierten Zeitspanne eine weitere Bewegungsdetektion über die Bewegungsdetektoreinheit 11, so fragt die Steuereinheit 3 über die Sensoren 12 die Lage des beweglichen Objektes ab. Die Sensoren 12 erfassen die Lage und die relative Position des beweglichen Objektes 1 zum Boden unter den beweglichen Objekt 1. Diese Daten der Sensoren 12 speichert die Steuereinheit 3 in regelmäßigen Abständen in der Speichereinheit 4. In einer vorteilhaften Ausgestaltung der Erfindung sind die Sensoren 12 als Abstandssenoren ausgebildet und am beweglichen Objekt 1 angeordnet und erfassen den Abstand zwischen dem beweglichen Objekt 1 und dem Boden darunter.

Stellt die Steuereinheit 3 fest, daß nach der Bewegungsdetektion sich die Lage des beweglichen Objektes 1 verändert hat, so liegt ein Alarmzustand vor.
In diesem Fall aktiviert die Steuereinheit 3 die Alarmeinheit 5. Die Alarmeinheit 5 ist beispielsweise eine Sirene.
Wird das bewegliche Objekt 1 trotz aktivierter Alarmeinheit 5 weiterhin bewegt, so aktiviert die Steuereinheit 3 die Fixierungseinrichtung 13. Bevor die Fixierungseinrichtung 13 mit der Fixierung des beweglichen Objektes 1 beginnt, wird über eine Ausgabeeinheit 10 folgende Meldung in visueller und akustischer Weise ausgegeben: "Warnung! Fixierung des Objektes erfolgt in 10 Sekunden! Verlassen Sie die Umgebung des Objektes! Lebensgefahr!". Die Fixierungseinrichtung 13 wird deaktiviert, wenn innerhalb von 10 Sekunden nach Ausgabe der Meldung die Bewegungsdetektoreinheit 11 keine Bewegung des bewegliche Objekts 1 feststellt und sich die Lage des beweglichen Objektes nicht weiter verändert. Erfolgt dennoch eine weitere Bewegung des beweglichen Objektes 1, so wird die Funktion der Fixierungseinheit 13 ausgelöst.
Die Fixierungseinheit 13 fixiert das bewegliche Objekt 1 kraftschlüssig mit dem unter dem beweglichen Objekt 1 befindlichen Boden. Dies erfolgt beispielsweise, indem die Fixierungseinrichtung 13 eine Harpune mit einem daran befestigten Stahlseil in den Erdboden katapultiert. Das Stahlseil ist mit dem beweglichen Objekt 1 verbunden. Somit kann das bewegliche Objekt 1 nicht ohne weiteren Aufwand entfernt werden.

Eine weitere mögliche Ausgestaltungsform der Fixierungseinrichtung 13 besteht aus einem Kunststoffgemisch, das aus einem Tank im Innern des beweglichen Objektes 1 mit Druck auf den Boden unter dem beweglichen Objekt gespritzt wird und eine klebende Verbindung zwischen dem beweglichen Objekt 1 und dem unter selbigen befindlichen herstellt.

Eine vorteilhafte Ausgestaltung der Erfindung sieht vor, daß die Bewegungsdetektoreinheit 11 durch einen Flüssigkeitsschalter realisiert ist.

Eine weitere besonders vorteilhafte Ausgestaltungsform der Erfindung sieht vor, daß das bewegliche Objekt 1 ein Kraftfahrzeug ist.
In einem Kraftfahrzeug wird als Energiespeicher und zur Energieversorgung der Einheiten der Diebstahlsicherung die Autobatterie verwendet. Diese wird bei laufendem Motor über eine Lichtmaschine wieder aufgeladen.
Die mobile Sendeeinheit 14a der Transpondereinheit 14 kann in den Zündschlüssel des Kraftfahrzeuges und die Transpondereinheit (14) mit der Empfangseinheit (14b) in dem Zündschloß des Kraftfahrzeuges integriert werden, wodurch eine Vereinfachung der Handhabung gewährleistet ist. Befindet sich der Zündschlüssel im Zündschloß des Kraftfahrzeuges, so ist die Diebstahlsicherung deaktiviert. Die ist allerdings nur solange der Fall, wie sich das Kraftfahrzeug in dem vom Leitrechner 7 vorgegebenen Bereich befindet. Verläßt das Kraftfahrzeug diesen Bereich, so wird eine Nachricht über die Ausgabeeinheit 10 an den Fahrer des Kraftfahrzeuges ausgegeben, daß er den zulässigen Bewegungsbereich verläßt und das Fahrzeug binnen 20 Sekunden deaktiviert wird, wenn sich das Kraftfahrzeug weiter aus dem zulässigen Bereich entfernt. Der Leitrechner 7 überprüft in diesem Fall, ob sich die Fahrtrichtung der Kraftfahrzeuges weiterhin aus dem zulässigen Bewegungsbereich entfernt und weist die Steuereinheit 3, falls dies trotz der ausgegebenen Warnung der Fall ist, über die Empfangseinheit 8 an, eine Funktionseinheit 9 des Kraftfahrzeuges zu deaktivieren und/oder zu zerstören. Hierdurch wird die Funktionsfähigkeit des Kraftfahrzeuges gestört und/oder beendet.

In vorteilhafter Weise betätigt in einem derartigen Alarmfall die Steuereinheit 3 die Bremsen des Kraftfahrzeuges um auf diese Weise die Geschwindigkeit das Kraftfahrzeug zu verringern und auf eine Höchstgeschwindigkeit von wenigen Stundenkilometern zu verringern. Zugleich aktiviert die Steuereinheit 3 die Warnblinkanlage, um andere Verkehrsteilnehmer zu warnen. Der Leitrechner 7 verständigt die zuständigen Stellen und informiert diese über den aktuellen Zustand des Kraftfahrzeuges und den aktuellen Standort.

Ist das Kraftfahrzeug geparkt, stellt dies sie Steuereinheit 3 über die Bewegungsdetektoreinheit 11 fest. In diesem Fall deaktiviert die Steuereinheit 3 verschiedene strom- bzw. energieverbrauchende Einheiten der Diebstahlsicherung. Im weiteren arbeitet die Diebstahlsicherung nach oben beschriebener Weise.

In vorteilhafter Weise können als Bewegungsdetektoren die ABS-Sensoren verwendet werden. Außerdem können die Sensoren 12 an den Stoßdämpfern angebracht werden. Wird das Kraftfahrzeug angehoben oder bewegt, so verändert sich die Belastung an den Stoßdämpfern, diese werden be- oder entlastet. Dies wird über die Sensoren 12 erkannt und von der Steuereinheit 3 ausgewertet.

## Patentansprüche

1. Diebstahlsicherung eines beweglichen Objektes (1) bestehend aus einer GPS-Einheit (2), einer Steuereinheit (3), einer Speichereinheit (4), einer Alarmeinheit (5), einer Empfangseinheit (8) und einer Sendeeinheit (6), wobei die Sendeeinheit (6) die von der GPS-Einheit (2) ermittelten Position des beweglichen Objektes (1) einem Leitrechner (7) übermittelt und zugleich die Steuereinheit (3) diese Position in einer Speichereinheit (4) speichert, der Leitrechner (7) die übermittelte Position mit einem für das bewegliche Objekt (1) vorgegebenen Bewegungsraum vergleicht und eine Alarmnachricht an das bewegliche Objekt (1) übermittelt, welche die Empfangseinheit (8) empfängt und an die Steuereinheit (3) weiterleitet, wenn das bewegliche Objekt (1) den vorgegebenen Bewegungsraum verläßt bzw. verlassen hat, eine Energieversorgungseinheit innerhalb des beweglichen Objektes (1), von außen unzugänglich, angeordnet ist, welche die Einheiten der Diebstahlsicherung mit Energie versorgt, und die Steuereinheit (3) die Alarmeinheit (5) aktiviert, wenn die Empfangseinheit (8) eine Alarmnachricht des Leitrechners (7) empfängt,
**dadurch gekennzeichnet,**
- **daß** eine Bewegungsdetektoreinheit (11) in oder am beweglichen Objekt (1) angeordnet ist,
- **daß** die Steuereinheit (3) die Bewegungsdetektoreinheit (11) aktiviert, wenn keine Verbindung zwischen dem Leitrechner (7) und der Empfangseinheit (8) besteht und von der GPS-Einheit (2) keine Positionsbestimmung möglich ist und
- **daß** die Steuereinheit (3) zugleich Einheiten der Diebstahlsicherung deaktiviert, um den Energieverbrauch zu reduzieren.

2. Diebstahlsicherung eines beweglichen Objektes (1) nach Anspruch 1
**dadurch gekennzeichnet,**
- **daß** die Steuereinheit (3) im Falle einer Bewegungsdetektion des beweglichen Objektes (1) durch die Bewegungsdetektoreinheit (11) die Deaktivierung der Einheiten der Diebstahlsicherung aufhebt,
- **daß** Sensoren (12), insbesondere Abstandserfassungssensoren, welche am beweglichen Objekt (1) angeordnet sind, die Lage des beweglichen Objektes (1) erfassen und die Steuereinheit (3) diese erfaßte Lage mit der vor der Bewegungsdetektion in der Speichereinheit (4) gespeicherten Lage des beweglichen Objektes (1) vergleicht,
- **daß** die Steuereinheit (3) die Alarmeinheit (5) aktiviert, wenn sich die Lage des beweglichen Objektes (1) verändert hat.

3. Diebstahlsicherung eines beweglichen Objektes (1) nach Anspruch 1 oder 2,
**dadurch gekennzeichnet,**
- **daß** die Steuereinheit (3) eine Fixierungseinrichtung (13) aktiviert, die am beweglichen Objekt (1) angeordnet ist, wenn die Steuereinheit (3) mittels der Bewegungsdetektoreinheit (11) eine Bewegung des beweglichen Objektes (1) erkennt und die Steuereinheit (3) innerhalb eines vorgegebenen Zeitraumes eine Veränderung der Lage des beweglichen Objektes (1) über die Sensoren (12) erkennt und eine Aktivierung der deaktivierten Einheiten durch die Steuereinheit (3) erfolgt ist,
- **daß** diese Fixierungseinrichtung (13) das bewegliche Objekt (1) mit dem unter selbigem sich befindlichen Boden kraftschlüssig verbindet.

4. Diebstahlsicherung eines beweglichen Objektes (1) nach Anspruch 3,
**dadurch gekennzeichnet,**
- **daß** die Fixierungseinrichtung (13) eine, am unteren Bereich des beweglichen Objektes (1) angeordnete Harpune ist, welche mit Seilen an dem beweglichen Objekt (1) befestigt ist und
- **daß** diese Harpune das bewegliche Objekt (1) mit dem den Boden unter dem beweglichen Objekt (1) kraftschlüssig verbindet oder
- **daß** die Fixierungseinrichtungen (12) ein Behälter mit einem Kunststoffgemisch ist, welcher im unteren Bereich des beweglichen Objektes (1) angeordnet ist und das Kunststoffgemisch eine klebende Verbindung des beweglichen Objektes (1) mit dem unter diesem befindlichen Boden eingeht.

5. Diebstahlsicherung eines beweglichen Objektes (1) nach einem der Ansprüche 1 bis 4,
**dadurch gekennzeichnet,**
**daß** vor der Auslösung der Fixierungeinrichtung (13) die Steuereinheit (3) über die Ausgabeeinheit (10) eine Warnmeldung an die Umgebung des beweglichen Objektes (1) abgibt.

6. Diebstahlsicherung eines beweglichen Objektes (1) nach Anspruch 5,
**dadurch gekennzeichnet,**
**daß** die Warnmeldung eine visuelle Meldung und/oder eine akustische Meldung ist.

7. Diebstahlsicherung eines beweglichen Objektes (1) nach einem der Ansprüche 1 bis 6,
**dadurch gekennzeichnet, daß**
- die Einheiten der Diebstahlsicherung, welche die Steuereinheit (3) deaktiviert bzw. aktiviert, die GPS-Einheit (2), der Alarmeinheit (5), die Sendeeinheit (6), die Empfangseinheit (8) und die Fixierungseinrichtung (13) sind.

8. Diebstahlsicherung eines beweglichen Objektes (1) nach einem der Ansprüche 1 bis 7,
**dadurch gekennzeichnet,**
- **daß** eine Transpondereinheit (14) am und im beweglichen Objekt (1) angeordnet ist,
- **daß** die Transpondereinheit (14) aus einer mobilen Sendeeinheit (14a) und einer in der Transpondereinheit (14) fest angeordneten Empfangseinheit (14b) besteht,
- **daß** eine Einrastvorrichtung für die mobile Sendeeinheit (14a) an der Transpondereinheit (14) vorhanden ist,
- **daß** die Diebstahlsicherung deaktiviert ist, wenn die Sendeeinheit (14a) in der Einrastvorrichtung der Transpondereinheit (14) eingerastet ist.

9. Diebstahlsicherung eines beweglichen Objektes (1) nach einem der Ansprüche 1 bis 8,
**dadurch gekennzeichnet,**
**daß** die Steuereinheit (3) eine Ausgabeeinheit (10) aktiviert, welche eine Warninformation ausgibt.

10. Diebstahlsicherung eines beweglichen Objektes (1) nach einem der Ansprüche 1 bis 9,
**dadurch gekennzeichnet,**
**daß** die Bewegungsdetektoreinheit (11) ein Flüssigkeitsschalter ist.

11. Diebstahlsicherung eines beweglichen Objektes (1) nach einem der Ansprüche 1 bis 10,
**dadurch gekennzeichnet,**
**daß** das bewegliche Objekt (1) ein Kraftfahrzeug ist.

12. Diebstahlsicherung eines beweglichen Objektes (1) nach Anspruch 11,
**dadurch gekennzeichnet,**
**daß** die Bewegungsdetektoreinheit (11) die vorhandenen ABS-Sensoren zur Bewegungsdetektion mitverwendet.

## Claims

1. Anti-theft device for a mobile object (1), comprising a GPS unit (2), a control unit (3), a memory unit (4), an alarm unit (5), a receiving unit (8) and a transmitting unit (6), wherein the transmitting unit (6) communicates the position, determined by the GPS unit (2), of the mobile object (1) to a master computer (7) and the control unit (3) also stores said position in a memory unit (4), the master computer (7) compares the communicated position with a movement space specified for the mobile object (1) and communicates an alarm message to the mobile object (1) that the receiving unit (8) receives and passes to the control unit (3) if the mobile object (1) leaves or has left the specified movement space, a power supply unit, inaccessible from the outside, is disposed within the mobile object (1), which power supply unit supplies the units of the anti-theft device with power, and the control unit (3) activates the alarm unit (5) if the receiving unit (8) receives an alarm message from the master computer (7),
**characterized**
- **in that** the movement detector unit (11) is disposed in or on the mobile object (1),
- **in that** the control unit (3) activates the movement detector unit (11) if no connection exists between the master computer (7) and the receiving unit (8) and a position determination by the GPS unit (2) is not possible, and
- **in that** the control unit (3) also deactivates units of the anti-theft device in order to reduce the power consumption.

2. Anti-theft device for a mobile object (1) according to Claim 1,
**characterized**
- **in that** the control unit (3) annuls the deactivation of the units of the anti-theft device in the event of detection of movement of the mobile object (1) by the movement detector unit (11),
- **in that** sensors (12), in particular distance determining sensors that are disposed on the mobile object (1), determine the position of the mobile object (1) and the control unit (3) compares this determined position with the position of the mobile object (1) stored in the memory unit (4) prior to the detection of movement,
- **in that** the control unit (3) activates the alarm unit (5) if the position of the mobile object (1) has altered.

3. Anti-theft device for a mobile object (1) according to Claim 1 or 2,
**characterized**
- **in that** the control unit (3) activates an immobilization device (13) that is disposed on the mobile object (1) if the control unit (3) detects a movement of the mobile object (1) by means of the movement detector unit (11) and the control unit (3) detects an alteration in the position of the mobile object (1) by means of the sensors (12) within a specified time interval and the deactivated units have been activated by the control unit (3),
- **in that** said immobilization device (13) bonds the mobile object (1) in a force-locked manner to the ground situated underneath it.

4. Anti-theft device for a mobile object (1) according to Claim 3,
**characterized**
- **in that** the immobilization device (13) is a harpoon that is disposed on the lower region of the mobile object (1) and that is attached to the mobile object (1) by cables, and
- **in that** said harpoon bonds the mobile object (1) in a force-locked manner to the ground underneath the mobile object (1) or
- **in that** the immobilization device (12) is a container that contains a plastic mixture and that is disposed in the lower region of the mobile object (1), and the plastic mixture enters into an adhesive bond of the mobile object (1) to the ground situated underneath it.

5. Anti-theft device for a mobile object (1) according to any of Claims 1 to 4, **characterized in that**, prior to the triggering of the immobilization device (13), the control unit (3) emits via the output unit (10) a warning signal to the surroundings of the mobile object (1) .

6. Anti-theft device for a mobile object (1) according to Claim 5, **characterized in that** the warning signal is a visual signal and/or an audible signal.

7. Anti-theft device for a mobile object (1) according to any of Claims 1 to 6, **characterized in that** the units of the anti-theft device that the control unit (3) deactivates or activates are the GPS unit (2), the alarm unit (5), the transmitting unit (6), the receiving unit (8) and the immobilization device (13).

8. Anti-theft device for a mobile object (1) according to any of Claims 1 to 7,
**characterized**
- **in that** a transponder unit (14) is disposed on or in the mobile object (1),
- **in that** the transponder unit (14) comprises a mobile transmitting unit (14a) and a receiving unit (14b) disposed in a fixed manner in the transponder unit (14),
- **in that** a latching device for the mobile transmitting unit (14a) is present on the transponder unit (14),
- **in that** the anti-theft device is deactivated if the transmitting unit (14a) is latched in the latching device of the transponder unit (14).

9. Anti-theft device for a mobile object (1) according to any of Claims 1 to 8, **characterized in that** the control unit (3) activates an output unit (10) that emits a warning information item.

10. Anti-theft device for a mobile object (1) according to any of Claims 1 to 9, **characterized in that** the movement detector unit (11) is a liquid switch.

11. Anti-theft device for a mobile object (1) according to any of Claims 1 to 10, **characterized in that** the mobile object (1) is a motor vehicle.

12. Anti-theft device for a mobile object (1) according to Claim 11, **characterized in that** the movement detector unit (11) concomitantly uses the existing ABS sensors for movement detection.

## Revendications

1. Dispositif anti-vol pour un objet mobile (1) se composant d'une unité GPS (2), d'une unité de commande (3), d'une unité de mémoire (4), d'une unité d'alarme (5), d'une unité de réception (8) et d'une unité d'émission (6), dans lequel :
l'unité d'émission (6) transmet la position détectée par l'unité GPS (2) de l'objet mobile (1) à un ordinateur pilote (7),
l'unité de commande (3) mémorise en même temps cette position dans une unité de mémoire (4),
l'ordinateur pilote (7) compare la position transmise à une zone de mouvement prescrite pour l'objet mobile (1) et transmet à l'objet mobile (1) un message d'alarme que l'unité de réception (8) reçoit et transmet à l'unité de commande (3) si l'objet mobile (1) quitte ou a quitté la zone de mouvement prescrite,
une unité d'alimentation en énergie est agencée dans l'objet mobile (1) et inaccessible de l'extérieur et alimente en énergie les unités du dispositif anti-vol, et
l'unité de commande (3) active l'unité d'alarme (5) si l'unité de réception (8) reçoit un message d'alarme de l'ordinateur pilote (7),
**caractérisé en ce que** :
- une unité de détection de mouvement (11) est agencée dans ou sur l'objet mobile (1) ;
- l'unité de commande (3) active l'unité de détection de mouvement (11) si aucune liaison n'est établie entre l'ordinateur pilote (7) et l'unité de réception (8) et si l'unité GPS (2) ne peut déterminer aucune position ; et
- l'unité de commande (3) désactive en même temps les unités du dispositif anti-vol pour réduire la consommation en énergie.

2. Dispositif anti-vol pour un objet mobile (1) selon la revendication 1,
**caractérisé en ce que** :
- l'unité de commande (3) annule la désactivation des unités du dispositif anti-vol si l'unité de détection de mouvement (11) détecte un mouvement de l'objet mobile (1) ;
- des capteurs (12), en particulier des capteurs de saisie de distance, qui sont agencés sur l'objet mobile (1), saisissent la position de l'objet mobile (1) et l'unité de commande (3) compare cette position saisie à la position mémorisée dans l'unité de mémoire (4) avant la détection du mouvement ; et
- l'unité de commande (3) active l'unité d'alarme (5) si la position de l'objet mobile (1) s'est modifiée.

3. Dispositif anti-vol pour un objet mobile (1) selon l'une ou l'autre des revendications 1 et 2, **caractérisé en ce que** :
- l'unité de commande (3) active un dispositif de fixation (13) agencé sur l'objet mobile (1) si elle reconnaît un mouvement de l'objet mobile (1) à l'aide de l'unité de détection de mouvement (11), et l'unité de commande (3) reconnaît une modification de la position de l'objet mobile (1) dans un intervalle de temps prescrit, et l'unité de commande (3) a activé les unités désactivées, et
- ce dispositif de fixation (13) relie l'objet mobile (1) au sol sur lequel il se trouve par coopération de force.

4. Dispositif anti-vol pour un objet mobile (1) selon la revendication 3,
**caractérisé en ce que** :
- le dispositif de fixation (13) est un harpon agencé dans la zone inférieure de l'objet mobile (1) et fixé à ce dernier par des câbles ; et
- ce harpon relie l'objet mobile (1) au sol sur lequel il se trouve par coopération de force ; ou
- le dispositif de fixation (12) est un récipient contenant un mélange de matière synthétique et qui est agencé dans la zone inférieure de l'objet mobile (1), et la matière synthétique établit une liaison adhésive de l'objet mobile (1) avec le sol sur lequel il se trouve.

5. Dispositif anti-vol pour un objet mobile (1) selon l'une des revendications 1 à 4, **caractérisé en ce que**, avant le déclenchement du dispositif de fixation (13), l'unité de commande (3) émet un message d'avertissement à l'environnement de l'objet mobile (1) via l'unité de sortie (10).

6. Dispositif anti-vol pour un objet mobile (1) selon la revendication 5, **caractérisé en ce que** le message d'avertissement est un message visuel et/ou acoustique.

7. Dispositif anti-vol pour un objet mobile (1) selon l'une des revendications 1 à 6, **caractérisé en ce que** les unités du dispositif anti-vol que l'unité de commande (3) active ou désactive sont : l'unité GPS (2), l'unité d'alarme (5), l'unité d'émission (6), l'unité de réception (8) et le dispositif de fixation (13).

8. Dispositif anti-vol pour un objet mobile (1) selon l'une des revendications 1 à 7, **caractérisé en ce que** :
- une unité de transpondeur (14) est agencée sur et dans l'objet mobile (1) ;
- l'unité de transpondeur (14) se compose d'une unité d'émission mobile (14a) et d'une unité de réception (14b) agencée stationnaire dans l'unité de transpondeur (14) ;
- un dispositif à enclenchement pour l'unité d'émission mobile (14a) se trouve sur l'unité de transpondeur (14) ; et
- le dispositif anti-vol est désactivé si l'unité d'émission (14a) est enclenchée dans le dispositif à enclenchement de l'unité de transpondeur (14).

9. Dispositif anti-vol pour un objet mobile (1) selon l'une des revendications 1 à 8, **caractérisé en ce que** l'unité de commande (3) active une unité de sortie (10) qui émet une information d'avertissement.

10. Dispositif anti-vol pour un objet mobile (1) selon l'une des revendications 1 à 9, **caractérisé en ce que** l'unité de détection de mouvement (11) est un interrupteur contenant du liquide.

11. Dispositif anti-vol pour un objet mobile (1) selon l'une des revendications 1 à 10, **caractérisé en ce que** l'objet mobile (1) est un véhicule automobile.

12. Dispositif anti-vol pour un objet mobile (1) selon la revendication 11, **caractérisé en ce que** l'unité de détection de mouvement (11) utilise conjointement les détecteurs existants du système ABS pour détecter les mouvements.
